Europäisches Patentamt

European Patent Office

Office européen des brevets

(11) Publication number: **0 167 065**
**B1**

# (12) EUROPEAN PATENT SPECIFICATION

(45) Date of publication of patent specification: **13.01.88**

(21) Application number: **85107595.2**

(22) Date of filing: **19.06.85**

(51) Int. Cl.⁴: **E 02 F 3/627, E 02 F 3/30, E 02 F 3/96, A 01 D 87/08**

(54) Mounting of implements on agricultural tractors.

(30) Priority: **22.06.84 GB 8415978**
**28.07.84 GB 8419310**
**01.02.85 GB 8502671**

(43) Date of publication of application:
**08.01.86 Bulletin 86/02**

(45) Publication of the grant of the patent:
**13.01.88 Bulletin 88/02**

(84) Designated Contracting States:
**AT BE CH DE FR GB IT LI LU NL SE**

(56) References cited:
**FR-A-1 468 550**
**FR-A-2 169 871**
**FR-A-2 282 561**
**FR-A-2 477 362**
**GB-A- 736 559**
**US-A-3 574 989**

(73) Proprietor: **Econ Group Limited**
**Boroughbridge Road**
**Ripon North Yorkshire, HG4 1UE (GB)**

(72) Inventor: **Lupton, William G.**
**c/o Econ Group Limited Boroughbridge Road**
**Ripon North Yorkshire, HG4 1UE (GB)**

(74) Representative: **Denmark, James**
**c/o Bailey Walsh & Co. 5 York Place**
**Leeds LS1 2SD Yorkshire (GB)**

Courier Press, Leamington Spa, England.

## Description

This invention relates to the mounting of implements on agricultural tractors, and by the expression "implements" is intended implements of the type such as flail hedge cutters gang mowers, rotary mowers having a working head supported from an arm means at one end thereof, the other end of the arm means being for mounting on the tractor.

Said implements conventionally as described and illustrated in U.S. Patent No. 3.574.989 have been mounted towards the rear of the tractor because of the shortage of space at other portions, for example the mid-section, of the tractor. It is desirable that the implement should be mounted to the rear of the tractor for weight distribution purposes, but this brings a significant disadvantage that the tractor driver normally is required to look forwardly for the purpose of steering the tractor, whereas when the rear mounted implement is working he must constantly look rearwards to ensure that the work of the implement is being carried out effectively. Furthermore, because of the rear mounting of the implement, it is awkward for the driver to judge how much he must steer the tractor in order that the tractor and the implement will avoid an obstruction. Again, problems can arise when the tractor has to be steered round curves or corners if for no other reason than as mentioned above that the tractor driver must look forwardly when turning a curve or corner, but he must also be aware of the rear mounted implement.

There is a case therefore for mounting the implement on another part of the tractor, for example on the mid-section, but space considerations have prevented this in the past.

The present invention provides a simple and effective means for enabling the implement to be mounted on the mid-section of the tractor.

It is known as described in French Patent Specification No. 2,169,871, to mount on tractors front loaders, such as bucket loaders which comprise essentially a loading bucket and articulated arms which can be manipulated by means of hydraulic jacks controlled from the tractor cabin. Present day front loaders are provided at the ends of the arms with connecting brackets, whilst the tractor is provided in the mid-section and at opposite sides thereof with fixed mounting brackets with which the connecting brackets cooperate to couple the loader to the tractor. The most recent designs are constructed so that the loader can be quick release connected to the tractor, and normally the loader will be positioned on the ground, and the tractor will be driven into a space between the loader arms so that the connecting brackets couple or can be made to couple with the mounting brackets.

There are various quick release coupling arrangements for the front loaders, a first of which comprises the provision of guide ramps on the tractor leading to the mounting brackets, and the connecting brackets on the arms engage the ramps as the tractor is driven forwards into the loader, whereby the connecting brackets are automatically guided into the correct relationship with the mounted brackets for the coupling of the loader to the tractor.

In another arrangement, the mounting brackets on the tractor comprise plates with apertures therein, whilst the loader arms are provided with substantially horizontally extending pins which have tapered ends. As the tractor is driven forwards into the loader, so the tapered ended pins enter the apertures in the mounting brackets, and then locking pins which pass through apertures of the taper ended pins are inserted to lock the loader to the tractor.

In yet another arrangement, the connecting brackets on the loader arms are raised to an elevated position, and then the tractor is manipulated into a position in which the mounting brackets are under the connecting brackets. The connecting brackets are then lowered (and this can be effected using the hydraulic rams of the loader) into the mounting brackets. Pins on the connecting brackets engage curved notches on the mounting brackets or vice versa, and apertures in the connecting brackets and mounting brackets are aligned. Releasable locking pins are inserted through these aligned apertures completing the coupling of the connecting and mounting brackets.

According to the present invention there is provided an agricultural implement or device for mounting on an agricultural tractor which is provided with mounting brackets at each side and mid-section thereof for receiving connecting brackets of a frontloader characterised in that said implement or device has means enabling the implement or device to be detachably mounted on said mounting brackets whereby the implement or device is cantilevered from the side of the tractor.

The said means may comprise a frame of U-shape configuration adapted to fit over the top of the front of the tractor, or round the front of the tractor. A combination of the frames such as described may in fact be used.

The implement head may be connected to such a frame by a pivotal or rigid mounting, or a disconnectible coupling. Where a pivotal mounting is provided, the pivotal mounting may be a horizontal pivot mounting or a vertical pivot mounting.

With the arrangement of the present invention, there is achieved the side mounting of the implement without requiring any additional mounting arrangements on the tractor, effective use being made of the mounting brackets normally provided for the front loader.

Several embodiments of the invention will now be described, by way of example, with reference to the accompanying drawings, which are diagrammatic, and wherein:—

Fig. 1 is a side elevation of a tractor and front loader combination;

Fig. 2 is a side elevation showing how the connecting and mounting brackets are coupled;

Fig. 3 is a front view showing how an implement may be connected to the mounting brackets in accordance with the present invention;

Fig. 4 shows respective view the implement mounted to the tractor shown in Fig. 1;

Fig. 5 is a side elevation similar to Fig. 1, but showing an alternative method of front loader mounting;

Fig. 6 is a view similar to Fig. 3 showing how the implement is mounted on the tractor mounting brackets as shown in Fig. 5;

Fig. 7 is a perspective view of the front portion of a tractor showing how an implement is mounted on an alternative form of mounting bracket;

Fig. 8 is a side view of the arrangement shown in Fig. 7, but with the implement mounted in position; and

Fig. 9 is a plan view of the arrangement shown in Fig. 8.

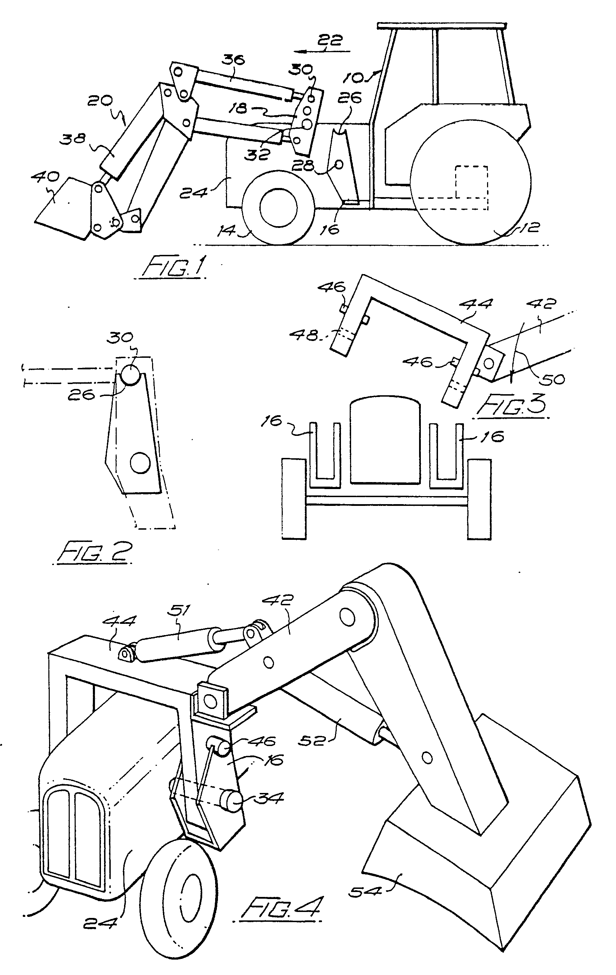

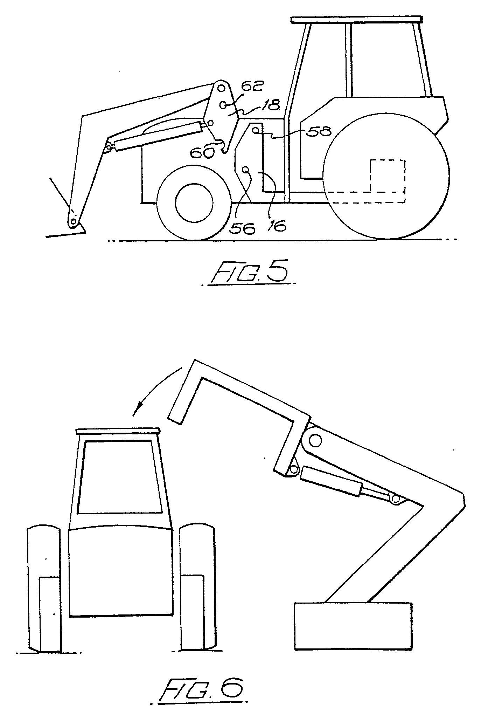

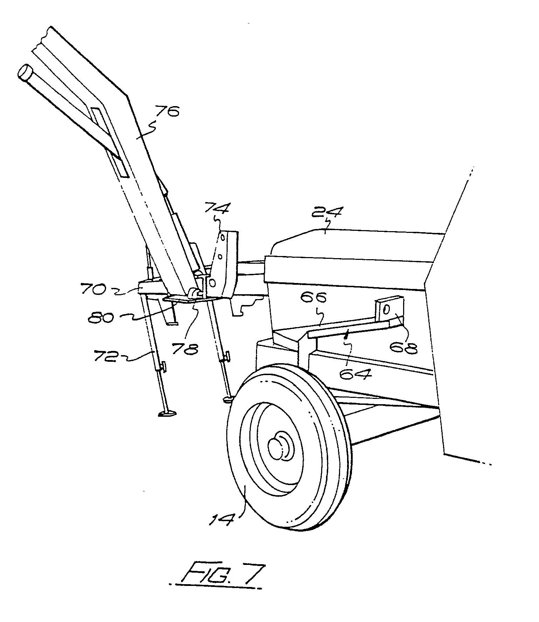

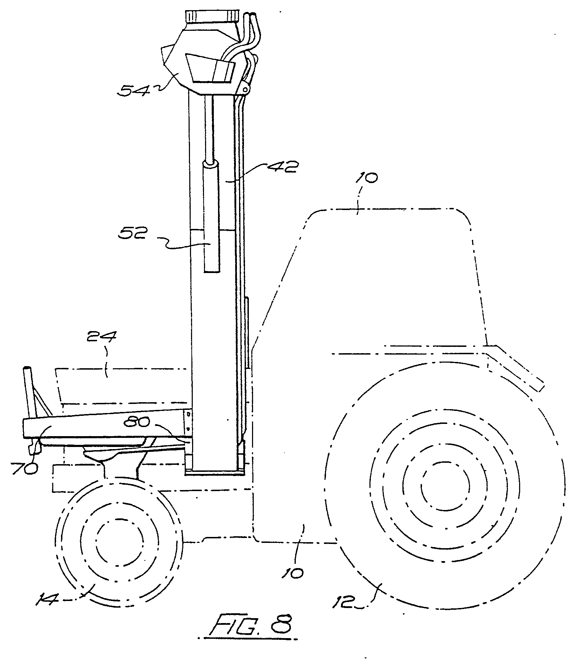

Referring to the drawings, agricultural tractor 10 is shown as provided with rear large wheels 12 and small front wheels 14. Mid-way of the wheels 12 and 14 at each side is a mounting bracket 16 for receiving a connecting bracket 18 of a front loader bucket arrangement 20. To connect the loader to the tractor, the tractor is driven forward as indicated by arrow 22, so that the respective connecting brackets 18 pass to each side of the front 24 of the tractor, and come into register with the mounting brackets 16. Each mounting bracket 16 is shown as having at the top thereof a curved notch 26, and an aperture 28. Each mounting bracket 18 has a pin 30 and an aperture 32. To couple the connecting brackets and mounting brackets, the connecting brackets are lowered until the pins 30 seat in the notches 26 as shown clearly in Fig. 2, and the apertures 32 and 28 come into register, also as shown in Fig. 2. To complete the coupling a releasable pin 34 (Fig. 4) is passed through the aligned apertures 32 and 28. This takes place at each side of the tractor, completing the coupling of the loader to the tractor. The loader may be manipulated by means of various manipulating rams 36 and 38, and whilst the tractor is being driven into position in relation to the loader, the loader may in fact be supported by standing on the bucket 40 or by being supported on retractable jacks or struts.

The present invention utilises the mounting brackets 16 for mounting the side mounted implement, and Fig. 3 shows one arrangement whereby a side mounted implement may be mounted on said brackets 16 in place of the loader. The implement may be as described herein, and has a manipulating arm 42 connected to a frame 44 of everted U configuration. The limbs of the frame 44 have pins 46 for seating in the notches 26, whilst the limbs also have apertures 48 which align with apertures 28 in the brackets 16, and the connection is completed by the passing of pins such as pins 34 with the aligned apertures 28 and 48. The implement may be coupled by pivoting the frame 44 downwards as indicated by arrow 50 in Fig. 3. The manipulation means might be achieved, as shown in Fig. 4 by means of rams 51, 52, the arm 42 being manipulated whilst the working head 54 of the implement supports the implement mass. Thus, the head 54 may be of sufficient mass to enable the arm to be supported thereby and hence simply rests on the ground.

Fig. 4 shows the frame 44 in position in relation to the tractor front 24. It will be seen that a simple and effective arrangement for the mounting of a side mounting implement which is cantilevered from the side of the tractor is achieved by the utilisation of existing mounting brackets on the front loader.

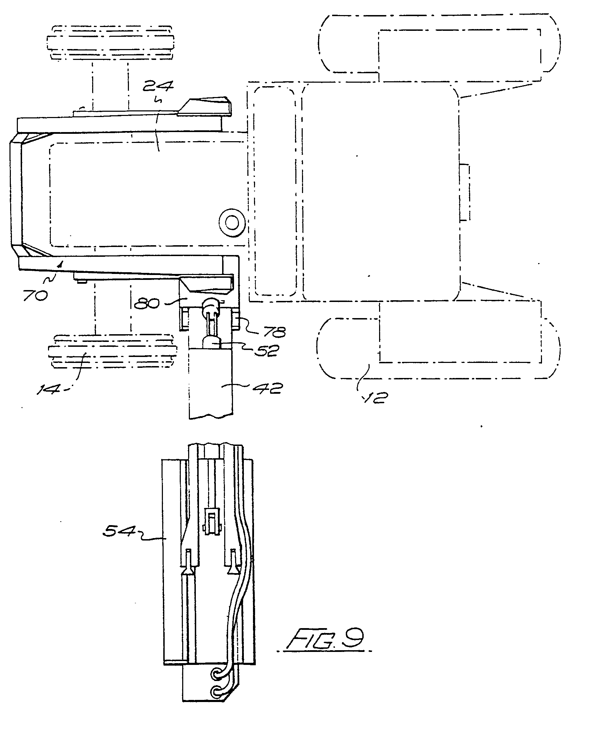

Alternative constructions are possible, and one alternative which is a slight variation on the arrangement shown in Fig. 1, is shown in Fig. 5. In this case, the brackets 16 have support pins 56 and locking apertures 58, whilst mounting brackets 18 have curved notches 60 at the bottom ends, and apertures 62. As in the Fig. 1 embodiment, the brackets 18 are lowered into the brackets 16 so that the pins 56 engage the curved notches 60, and then the apertures 62 and 58 are brought into alignment to receive locking pins as before.

Fig. 6 is a view similar to Fig. 3 showing how the implement is coupled to the brackets 16 shown in Fig. 5.

In the embodiment of the invention shown in Figs. 7, 8 and 9, the mounting brackets 64 comprise ramp portions 66 leading to fixing portions 68, this arrangement being provided to enable the loader connecting brackets to engage the relevant portions 66 and to slide into position in relation to the fixing portions 68 as the tractor is driven forward. In this example, the implement is connected to a U-shape supporting frame 70 which is disposed substantially horizontally, and is supported on retractable legs 72. As the tractor is driven forward, the side limbs of the frame 70 pass over the respective sides of the front of the tractor, and the connecting brackets 74 engage the ramps 66 and then ride up the ramps into position in relation to the fixing portions 68, and the brackets 74 are fixed to fixing portions 68 by any suitable means. The implement manipulating arm 76 is connected by means of a horizontal pivot 78 to fixing 80 carried by the frame 70.

Figs. 8 and 9 show the implement fully connected to the tractor, and with the support legs 72 retracted. It will be seen that the implement is again supported amidships of the tractor front and rear wheels although in fact the mounting brackets normally used for the loader are connected to the tractor to the front of the tractor as shown clearly in Fig. 7. Reference numerals used in Figs. 7, 8 and 9 which have already been used in Figs. 1 to 4 are used to designate the same parts as have already been described in relation to Figs. 1 to 4.

In yet a further arrangement, not shown, the mounting brackets for the loader comprise plates with apertures therein, and the loader is provided with substantially horizontal extending pins which engage in said apertures as the tractor is driven into the loader. The pins may be locked in position by further pins passing through apertures in the aforementioned pins in those portions which have previously been passed through the said apertures, to prevent retraction through said plate apertures.

The present invention provides for the ready mounting of a side arm implement, such as a flail mower or rotary mower mounted to either side of the tractor, and supported suitably between the front and rear wheels for stability and for easy visual monitoring in use.

Furthermore, it may be desired to provide the implement with a plurality of different adaptors, to enable it to be connected to the respective mounting brackets of different forms of loader mounting arrangements.

It is possible to use the loader mounting brackets for mounting other types of implements, such as gang mowers, and in one specific arrangement there may be one gang at each side of the tractor, mounted on the loader brackets or loader frame, and there may be a further mower at the front of the tractor.

The mountings for the loader are typically fitted on either or each side of the tractor. In some cases they are mounted independently but in other cases are interconnected underneath the tractor, and/or over the top of the tractor and/or round the front of the tractor, but in each case form an arrangement on the tractor on which loaders are detachably fitted. These arrangements provide the means for mounting the implement when the loader or loader part is removed.

## Claims

1. An agricultural implement or device for mounting on an agricultural tractor (10) which is provided with mounting brackets (16, 60) at each side and at mid-section thereof for receiving connecting brackets of a front loader characterised in that said implement or device has means (44, 70) enabling the implement or device to be detachably mounted on said mounting brackets (16, 64) whereby the implement or device is cantilevered from the side of the tractor (10).

2. An agricultural implement or device according to claim 1, characterised in that said enabling means (44, 70) comprises a U-shaped frame (44, 70).

3. An agricultural implement or device according to claim 2, characterised in that the frame (44, 70) is adapted to be positioned on the tractor (10) in a vertical plane and in inverted condition.

4. An agricultural implement or device according to claim 3 characterised in that the implement or device comprises a working head (54) and an articulated boom (42) which is pivotally connected to said U-shaped frame (44, 70).

## Patentansprüche

1. Landwirtschaftliches Gerät oder Vorrichtung zur Befestigung an einem landwirtschaftlichen Traktor (10), welcher mit Befestigungsträgern (16, 64) an jeder Seite und an einem Mittelabschnitt ausgestattet ist, um Verbindungsträger eines Frontladers aufzunehmen, dadurch gekennzeichnet, daß das Gerät oder die Vorrichtung Einrichtungen (44, 70) aufweist, die das Gerät oder die Vorrichtung befähigen, abnehmbar an den Befestigungsträgern (16, 64) befestigt zu werden, wobei sich das Gerät oder die Vorrichtung freitragend von der Seite des Traktors (10) befindet.

2. Landwirtschaftliches Gerät oder Vorrichtung nach Anspruch 1, dadurch gekennzeichnet, daß die Einrichtungen (44, 70) einen U-förmigen Rahmen (44, 70) aufweisen.

3. Landwirtschaftliches Gerät oder Vorrichtung nach Anspruch 2, dadurch gekennzeichnet, daß der Rahmen (44, 70) so ausgelegt ist, daß er an dem Traktor (10) in einer Vertikalebene und in umgedrehter Lage befestigbar ist.

4. Landwirtschaftliches Gerät oder Vorrichtung nach Anspruch 3, dadurch gekennzeichnet, daß das Gerät oder die Vorrichtung einen Arbeitskopf (54) und einen Gelenkausleger (42) aufweist, der schwenkbar mit dem U-förmigen Rahmen (44, 70) verbunden ist.

## Revendications

1. Appareil ou dispositif agricole à monter sur un tracteur agricole (10) muni, de chaque côté, au milieu, de supports (16, 64) destinés à loger les éléments de liaison d'un chargeur frontal caractérisé en ce que ledit appareil ou dispositif comprend un moyen (44, 70) le rendant amovible sur lesdits supports (16, 64) de manière que l'appareil ou le dispositif soit monté en porte-à-faux sur le côté du tracteur (10).

2. Appareil ou dispositif agricole selon la revendication 1, caractérisé en ce que ledit moyen (44, 70) est formé d'un bâti en U (44, 70).

3. Appareil ou dispositif selon la revendication 2, caractérisé en ce que le bâti (44, 70) est adapté pour être placé sur le tracteur (10) dans un plan vertical et en position inversée.

4. Appareil ou dispositif selon la revendication 3, caractérisé en ce que l'appareil ou le dispositif comprend une tête de travail (54), et un bras articulé (42) qui est monté pivotant sur ledit bâti en U (44, 70).

FIG.1

FIG.2

FIG.3

FIG.4

1

_FIG. 5_

_FIG. 6_

0 167 065

FIG. 7

3

FIG. 8

4

FIG.9